# FASCICULE DE BREVET EUROPEEN

(11) **EP 3 637 200 B1**
(45) Date de publication et mention de la délivrance du brevet: **14.09.2022**
(21) Numéro de dépôt: 18199430.2
(22) Date de dépôt: 09.10.2018
(51) Int. Cl.: G04B 19/30

(54) **DISPOSITIF D'AFFICHAGE LUMINEUX**
LEUCHTANZEIGEVORRICHTUNG
LUMINOUS DISPLAY DEVICE

(43) Date de publication de la demande: 15.04.2020
(73) Titulaire: The Swatch Group Research and Development Ltd, 2074 Marin (CH)
(72) Inventeur: MOUSKEFTARAS, Alexandros, 13008 Marseille (FR); TORTOA, Pierpasquale, 2000 Neuchâtel (CH)
(74) Mandataire: ICB SA

(56) Documents cités:
- EP-A1- 2 950 167
- WO-A1-01/44871
- WO-A1-2014/170872
- CH-B1- 698 868
- JP-A- 2015 025 789
- US-A1- 2013 083 508

## Description

### Domaine de l'invention

La présente invention concerne un dispositif d'affichage lumineux pour un objet portable. La présente invention concerne en particulier un dispositif d'affichage lumineux pour une pièce d'horlogerie telle qu'une montre-bracelet ou un appareil de mesure à affichage analogique.

### Arrière-plan technologique de l'invention

Les aiguilles d'une montre jouent bien sûr un rôle fonctionnel, par exemple indiquer l'heure courante, mais elles jouent également un rôle décoratif en contribuant largement à l'aspect esthétique de la montre qu'elles équipent. A cet effet, les aiguilles doivent répondre à des critères stricts. Une technique bien connue dans le monde horloger pour permettre aux aiguilles d'être visibles dans le noir consiste à revêtir la surface des aiguilles orientée du côté de l'utilisateur d'une couche de matériau phosphorescent. Un exemple d'un tel matériau est un pigment photoluminescent non radioactif commercialisé par la société japonaise Nemoto & Co., Ltd. sous la marque enregistrée Super-Luminova^{®}. Ce pigment peut aussi être utilisé pour revêtir les index horaires du cadran de la montre. De jour, la couche de matériau phosphorescent absorbe l'énergie lumineuse. Cette énergie lumineuse est ensuite restituée de nuit par la couche de matériau phosphorescent sous forme de rayonnement lumineux. Cette technique d'illumination des aiguilles d'une montre est assez commode dans la mesure où le fonctionnement de la couche de matériau phosphorescent est totalement passif et ne nécessite donc, pour son fonctionnement, l'actionnement d'aucun dispositif mécanique ou électrique, ni prélèvement d'énergie qui serait fournie par la montre.

Cette technique d'illumination des aiguilles d'une montre présente toutefois également certains inconvénients, au premier rang desquels on peut citer le fait que la couche de matériau phosphorescent nécessite d'être préalablement éclairée par une source de lumière avant de pouvoir émettre de l'énergie lumineuse. De même, le phénomène de réémission de lumière par effet de phosphorescence est limité dans le temps, de sorte qu'au fur et à mesure que la couche phosphorescente relâche l'énergie lumineuse qu'elle a stockée, sa luminosité décroît. Les aiguilles revêtues d'une couche de matériau phosphorescent n'ont donc pas un aspect constant. Enfin, la gamme de matériaux phosphorescents disponibles sur le marché est limitée, de sorte que la plupart des montres dans lesquelles de tels matériaux sont utilisés finissent par avoir le même aspect dans l'obscurité et même en plein jour.

Le document EP 2 950 167 propose d'illuminer les aiguilles au moyen d'une source lumineuse disposée à proximité de l'axe de l'aiguille, la source étant alimentée en électricité via d'une part un conducteur lié à l'axe, et d'autre part via un conducteur en contact avec le cadran. L'aiguille de ce document comprend un guide d'ondes permettant de diffuser la lumière tout au long de l'aiguille, ce qui permet de visualiser son orientation. Néanmoins, ce document ne résout pas le problème de l'éclairage du cadran, et en particulier le problème de l'éclairage des index du cadran.

On connait également des documents US2013 083508, CH698868 et JP2015025789 des dispositifs d'illuminations d'aiguilles.

### Résumé de l'invention

La présente invention a pour but de remédier aux inconvénients susmentionnés ainsi qu'à d'autres encore en procurant un dispositif d'affichage d'éléments d'un cadran pouvant être illuminés à la demande de l'utilisateur, selon une grande variété de couleurs et en respectant les contraintes dimensionnelles et esthétiques auxquelles le dispositif est soumis.

A cet effet, la présente invention concerne un dispositif d'affichage tel que défini dans la revendication indépendante 1.

Des réalisations préférées sont définies dans les revendications dépendantes.

### Brève description des figures

D'autres caractéristiques et avantages de l'invention ressortiront plus clairement de la description détaillée qui suit d'un mode de réalisation de l'invention, cet exemple étant donné à titre purement illustratif et non limitatif en liaison avec les dessins annexés.
La figure 1 est une vue d'un exemple de montre-bracelet selon l'invention.
La figure 2 représente une vue en coupe d'un exemple de dispositif d'affichage selon l'invention illustrant son principe de fonctionnement.
La figure 3 représente une vue en coupe d'un autre exemple de dispositif d'affichage selon l'invention.
La figure 4 représente une vue en coupe d'un autre exemple de dispositif d'affichage selon l'invention.
La figure 5 représente une vue en coupe d'un exemple de dispositif d'affichage comprenant deux aiguilles.
La figure 6 représente une vue schématique de l'agencement général des guides d'ondes sur un dispositif d'affichage selon l'invention.

### Description détaillée d'un mode de réalisation de l'invention

La présente invention procède de l'idée générale inventive qui consiste à éclairer un index de montre ou tout type d'élément d'affichage 7 d'un cadran 8 par un guide d'ondes lumineuses 4 intégré dans le cadran 8, le guide d'ondes intégré 4 dans le cadran 8 étant couplé à un guide d'ondes 2 disposé dans une aiguille 9 (ou un disque mobile) lorsque cette aiguille passe à une position prédéterminée. De cette façon, l'élément d'affichage 7 éclairé à un instant donné est déterminé par la position de l'aiguille. Etant donné le sens de circulation de la lumière du guide d'ondes 2 de l'aiguille 9 vers le guide d'ondes 4 du cadran 8, nous appellerons dans la suite de cette description le guide d'ondes 2 de l'aiguille 9 le guide d'ondes primaire 2, et le guide d'ondes 4 du cadran 8 le guide d'ondes secondaire 4.

L'avantage d'une telle disposition est de permettre un affichage actif de l'heure ou de la minute courante de façon purement mécanique, sans qu'il soit nécessaire d'installer autant de sources lumineuses que d'index, et sans une électronique d'adressage permettant d'éclairer sélectivement l'index correspondant à l'heure ou à la minute courante.

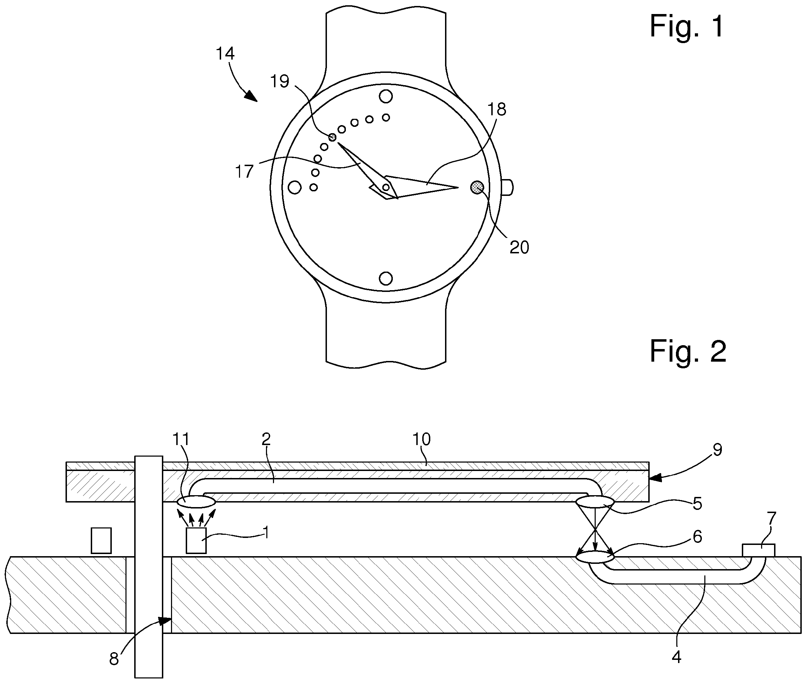

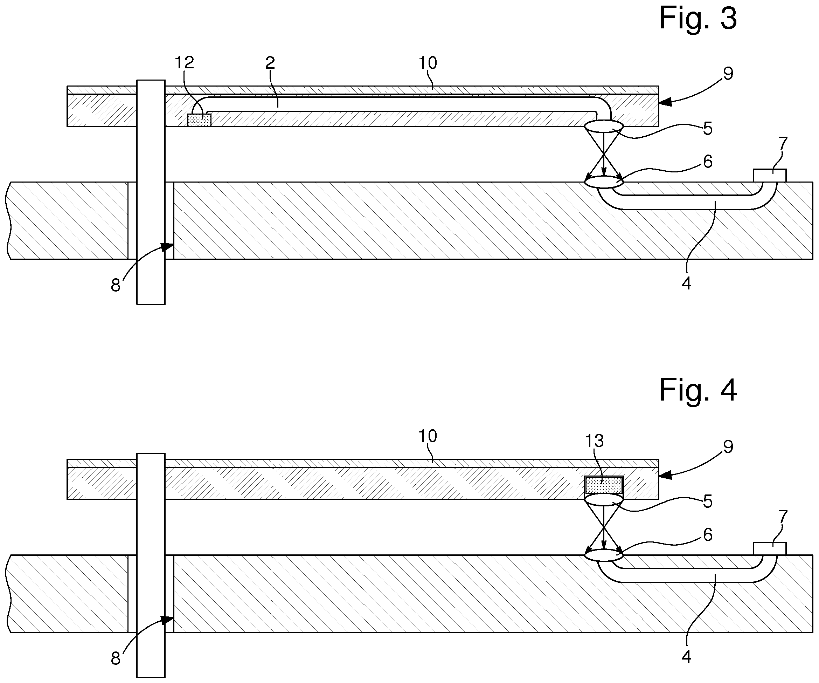

Selon un mode préféré de l'invention, tel que représenté à la figure 2, la source lumineuse 1 alimentant le guide d'ondes primaire 2 est fixée au cadran 8 à proximité immédiate de l'axe de l'aiguille 9. La source peut alors avantageusement être couplée au guide d'ondes primaire 2 via une microlentille 11. Dans ce cas, la source est de préférence une LED de forme annulaire éclairant la base de l'aiguille 9. Selon une variante, la source lumineuse peut être formée d'une source OLED s'étendant selon un anneau. De même, alternativement à ce qui représenté à la Figure 2, la microlentille 11 pourrait être intégrée sur la LED et présenter une courbure qui correspond à l'ouverture numérique du guide d'ondes primaire 2. Cette variante permet avantageusement de coupler plus de lumière dans le guide d'ondes primaire 2. De façon alternative, tel que représenté à la figure 3, une source lumineuse 12 peut être intégrée à l'aiguille 9. Dans ce cas, cette source lumineuse 12 peut par exemple être alimentée par un système tel que décrit dans le document EP 2 950 167 et couplé au guide d'ondes primaire 2 à proximité de l'axe.

Enfin, selon une autre alternative représentée à la figure 4, la source lumineuse peut être disposée directement sous l'aiguille 9, en vis-à-vis de la zone de couplage 6 du guide d'ondes secondaire. Néanmoins, une telle disposition peut être rendue compliquée par la finesse des aiguilles. Par contre, dans ce cas, la source lumineuse est directement couplée au guide d'ondes secondaire 4, sans qu'un guide d'ondes primaire ne soit nécessaire.

Dans tous les cas, la source lumineuse 1, 12, 13 est de préférence une source à haut rendement tel qu'une LED ou un laser semi-conducteur de faible puissance.

Avantageusement, l'aiguille 9 comprend une couche de matériau transparent dans lequel est écrit le guide d'ondes primaire 2. Par "écrire" un guide d'ondes dans un matériau transparent, nous entendons la réalisation d'un volume tubulaire formant un guide d'ondes par une augmentation localisée de l'indice de réfraction. Une telle écriture peut être obtenue selon un procédé connu tel que l'utilisation de lasers focalisés à impulsions courtes (femto secondes). De tels procédés sont par exemple décrit dans les documents WO 01/44871 et WO 2014/170872. L'avantage d'un tel guide d'ondes inscrit/écrit dans un matériau transparent est d'une part d'éviter un assemblage complexe, et d'autre part de permettre une intégration discrète.

Le matériau transparent peut aussi être couvert d'une couche de matériau opaque 10, ce qui présente l'avantage de masquer la source lumineuse 1, 12 et d'apporter un avantage esthétique.

Selon une variante le matériau transparent peut être déposé sur une aiguille classique, par exemple en laiton bronze, le guide d'ondes étant ensuite écrit dans le matériau transparent. A titre d'exemple un tel matériau peut être une couche de diamant. Cette variante peut bien entendu également être mise en œuvre en liaison avec le cadran qui peut être revêtu d'une couche de matériau transparent puis écrit comme mentionné ci-dessus.

Le guide d'ondes secondaire 4 est de préférence intégré dans une couche transparente dans laquelle ledit guide d'ondes secondaire 4 est inscrit. Cette inscription est particulièrement avantageuse dans le cas du cadran 8. En effet, il y aura généralement lieu d'inscrire autant de guides d'ondes 4 que d'index, soit souvent douze index 7 pour l'affichage des heures et douze index pour l'affichage des cinq minutes, soit un total de 24 guides d'ondes distincts. L'écriture par un faisceau laser permet une telle complexité avec une précision largement satisfaisante.

On notera que dans le cas du cadran et notamment du fait qu'il s'agit d'un élément plus volumineux qu'une fine aiguille, les guides secondaires 4 pourraient selon une variante être intégrés dans l'épaisseur du cadran sous forme des plaquettes en plastique ou en verre transparent.

Le couplage entre le guide d'ondes primaire 2 et le guide d'ondes secondaire se fait de préférence via des microlentilles 5, 6 permettant de réduire la perte de lumière dans la zone de couplage.

De préférence et de façon à ce qu'il y ait en permanence au moins une zone d'affichage éclairée pour chaque aiguille 9 la zone de couplage 6 du guide d'ondes secondaire 4 présente une surface plus petite que la surface en projection du faisceau de lumière incident sur le cadran d'une part et que la distance entre deux zones de couplage 6 successives soit inférieure à la plus grande dimension du faisceau incident sur le cadran.

La lumière du guide d'ondes secondaire est de préférence extraite par une zone 7 ayant un fini de surface dépoli de façon à diffuser la lumière dans toutes les directions.

Avantageusement, la lumière injectée dans le guide d'ondes primaire 2 est une lumière UV ou bleue ayant au moins une longueur d'onde inférieure à 450nm, de préférence inférieure à 380nm, et la zone d'index 7 comprend des fluorophores émettant dans le spectre visible lorsqu'ils sont excités par de la lumière bleue ou UV. Une telle combinaison permet de réduire la lumière parasite éventuellement perçue par l'utilisateur et concentre l'attention de celui-ci sur la zone d'index éclairée.

Au moins un guide d'ondes secondaire peut avantageusement être couplé à un détecteur couplé à un processeur permettant par exemple de contrôler avec précision l'heure affichée, et comparer cette donnée avec une horloge de référence pour un éventuel réglage automatique.

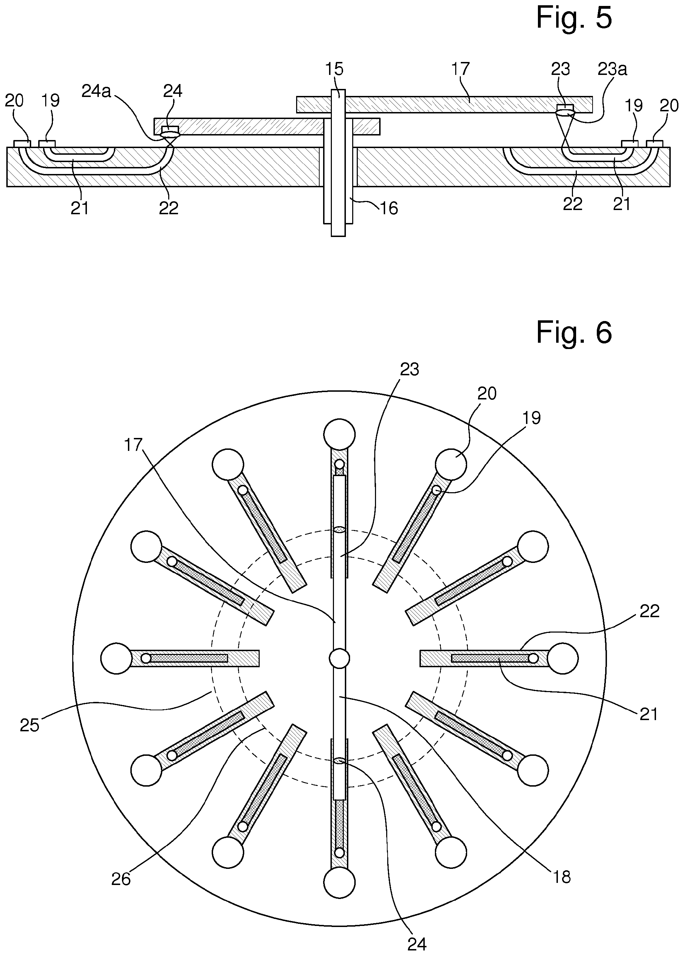

La figure 5 représente une vue en coupe d'un exemple préféré de cadran de montre selon un exemple préféré de l'invention. Cette figure correspond à la vue du dessus de la figure 6.

On observe à la figure 5 une aiguille 18 correspondant à l'affichage des heures dont la source lumineuse 24 est couplée à un des guides d'ondes 22 éclairant l'index via une microlentille 24a, des heures 20 lorsque l'aiguille passe en vis-à-vis de celui-ci. De façon correspondante, la source lumineuse 23 de l'aiguille 17 correspondant à l'affichage des minutes est couplée via une microlentille 23a, à un des guides d'ondes 21 éclairant l'index 19 des minutes lorsque l'aiguille passe en vis-à-vis de celui-ci.

On notera que dans le mode de réalisation de la figure 5 les microlentilles d'entrée du guide d'ondes secondaire ont été omises. Bien entendu, selon une première variante ces les microlentilles d'entrée du guide d'ondes secondaire peuvent être ajoutées et dans une deuxième variante les microlentilles 23a, 24a peuvent être également omises.

Les extrémités proximales des guides d'ondes éclairant les index des heures sont disposées sur une première circonférence 26, tandis que les index des minutes sont disposés sur une seconde circonférence 25, de façon à éviter les interférences entre les deux affichages. Il va de soi que les fluorophores peuvent également être de couleur différente pour les heures et les minutes, ou encore entre les minutes et les quart d'heures, par exemple.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées. On pourra notamment prévoir que les éléments d'affichage 7 présentent d'autres formes que celles de pastilles, par exemple des formes de segments pour former un chiffre ou un caractère et permettre un affichage numérique ou encore tout autre forme figurative. Dans l'exemple décrit ci-dessus, les guides d'ondes sont réalisés par une modification localisée de l'indice de réfraction et invisible à l'œil humain, toutefois on pourra également envisager de réaliser ces guides d'ondes par génération de défaut à l'intérieur pour créer un chemin de diffusion de la lumière à l'intérieur de la matière et ainsi crée des guides d'ondes visibles pour l'œil humain.

### Légende des figures

1. Source lumineuse
2. Guide d'ondes primaire
3. Zone de couplage
4. Guide d'ondes secondaire
5. Microlentille de sortie du guide d'ondes primaire
6. Microlentille d'entrée du guide d'ondes secondaire
7. Elément d'affichage
8. Cadran
9. Aiguille mobile
10. Couche opaque
11. Microlentille d'entrée du guide d'ondes primaire
12. Source lumineuse
13. Source lumineuse
14. Objet portable
15. Axe de l'aiguille des minutes
16. Axe de l'aiguille des heures
17. Aiguille des minutes
18. Aiguille des heures
19. Index des minutes
20. Index des heures
21. Guide d'ondes secondaire minutes
22. Guide d'ondes secondaires heures
23. Source lumineuse minutes
23a. Microlentille de sortie du guide d'ondes primaire
24. Source lumineuse heures
24a. Microlentille de sortie du guide d'ondes primaire
25. Circonférence de couplage des minutes
26. Circonférence de couplage des heures

## Revendications

1. Dispositif d'affichage pour un objet portable (14), l'objet portable (14) comprenant un cadran (8) et au moins une aiguille (9, 17, 18) mobile en rotation au-dessus du cadran, ladite au moins une aiguille (9, 17, 18) mobile comprenant une source lumineuse (12, 13) ou étant couplée à une source lumineuse (1, 12, 13, 23, 24), le dispositif d'affichage étant **caractérisé en ce que** le cadran comprend au moins un premier guide d'ondes lumineuses dit «secondaire» (4, 21, 22) comprenant une extrémité proximale ménagé dans un secteur prédéterminé du cadran et une extrémité distale définissant une zone d'affichage , la source lumineuse (1, 12, 13) et le guide d'ondes secondaire (4, 21, 22) étant agencés de façon à ce que la source lumineuse (1, 12, 13, 23, 24) soit couplée à l'extrémité proximale du guide d'ondes secondaire (4, 21, 22) lorsque l'aiguille mobile (9) passe dans le secteur prédéterminé du cadran (8), l'extrémité distale du guide d'ondes secondaire (4, 21, 22) étant couplée à un élément d'affichage (7) du cadran (8) prévue dans la zone d'affichage.

2. Dispositif d'affichage selon la revendication 1, **caractérisé en ce que** ladite au moins une aiguille (9, 17, 18) mobile comprend un deuxième guide d'ondes lumineuses dit « primaire » (2), une extrémité proximale du guide d'ondes lumineuses primaire (2) étant couplée à la source lumineuse (1, 12), une extrémité distale du guide d'ondes primaire (2) et une extrémité proximale du guide d'ondes secondaire (4, 21, 22) étant agencées de façon à ce que le guide d'ondes primaire (2) soit couplé à l'extrémité proximale du guide d'ondes secondaire (4) lorsque l'aiguille mobile (9, 17, 18) passe dans le secteur prédéterminé du cadran (8).

3. Dispositif d'affichage selon la revendication 2, **caractérisé en ce que** la source lumineuse (1) est une zone annulaire fixée au cadran (8) couplée à l'extrémité proximale du guide d'ondes primaire.

4. Dispositif d'affichage selon la revendication 2, **caractérisé en ce que** la source lumineuse (12) est intégrée à l'aiguille mobile (9, 17, 18).

5. Dispositif d'affichage selon l'une des revendications 2 à 4, **caractérisé en ce que** l'aiguille mobile (9, 17, 18) comprend un matériau transparent dans lequel est écrit ledit guide d'ondes primaire (2), ledit guide d'ondes primaire (2) étant courbé de façon à faciliter l'extraction de la lumière et le couplage avec ledit guide d'ondes secondaire (4, 21, 22).

6. Dispositif d'affichage selon la revendication 5, **caractérisé en ce que** le guide d'ondes primaire (2) comprend une portion rectiligne reliés à ses deux extrémités par deux portions courbes débouchant respectivement en regard de la source lumineuse (12) et de l'extrémité proximale du guide d'ondes secondaire (4, 21, 22).

7. Dispositif d'affichage selon la revendication 5 ou 6 **caractérisé en ce que** le guide d'ondes primaire (2) est réalisé dans l'épaisseur de l'aiguille (9, 17, 18).

8. Dispositif d'affichage selon l'une des revendications précédentes, **caractérisé en ce que** le cadran (8) comprend au moins une couche transparente dans laquelle est écrit ledit guide d'ondes secondaire (4, 21, 22) ledit guide d'ondes secondaire (4, 21, 22) étant courbé de façon à faciliter le couplage avec la source lumineuse (1, 12, 13, 23, 24) et l'élément d'affichage.

9. Dispositif d'affichage selon la revendication 8, **caractérisé en ce que** le guide d'ondes secondaire (4, 21, 22) comprend une portion rectiligne reliés à ses deux extrémités par deux portions courbes débouchant respectivement en regard de l'extrémité distale du guide d'ondes primaire et de l'élément d'affichage.

10. Dispositif d'affichage selon la revendication 8 ou 9 **caractérisé en ce que** le guide d'ondes secondaire (4, 21, 22) est réalisé dans l'épaisseur de la couche transparente du cadran.

11. Dispositif d'affichage selon l'une des revendications précédentes, **caractérisé en ce que** ladite source lumineuse (1, 12, 13, 23, 24) émet une lumière à une longueur d'onde inférieure à 450nm, l'élément d'affichage (7) comprenant des pigments fluorescents émettant de la lumière visible lorsqu'ils sont éclairés par ladite source lumineuse (1, 12, 13).

12. Dispositif d'affichage selon l'une des revendications précédentes, **caractérisé en ce qu'**il comprend des microlentilles (5, 6, 11) pour coupler la source lumineuse (1, 12, 13) au guide d'ondes secondaire (4).

13. Dispositif selon la revendication 12 **caractérisé en ce que** les micro lentilles (5, 6, 11) sont agencées en regard de l'extrémité distale du guide d'ondes primaire et de l'extrémité proximale du guide d'ondes secondaire.

14. Dispositif d'affichage selon l'une des revendications 2 à 13, **caractérisé en ce que** l'aiguille (9) comprend une couche décorative (10) opaque masquant le guide d'ondes primaire (2) ou la source lumineuse (12, 13).

15. Dispositif d'affichage selon l'une quelconque des revendications précédentes **caractérisé en ce que** le cadran (8) comprend une pluralité de guides d'ondes secondaires (21, 22) s'étendant selon des rayons angulairement régulièrement répartis sur 360°.

16. Dispositif d'affichage selon l'une quelconque des revendications précédentes **caractérisé en ce que** le cadran comprend un premier jeu de guides d'ondes secondaires (21) dont l'extrémité distale de chacune est associée à un index de minutes (19) d'un tour d'heures.

17. Dispositif d'affichage selon la revendication 16 **caractérisé en ce qu'**il comprend une deuxième aiguille mobile en rotation au-dessus du cadran, **en ce que** le cadran comprend un deuxième jeu de de guides d'ondes secondaires, la deuxième aiguille comprenant une deuxième source lumineuse ou étant couplée à une deuxième source lumineuse, la deuxième source lumineuse et le deuxième jeu de guide d'ondes secondaire étant agencés de façon à ce que la deuxième source lumineuse soit couplée à l'extrémité proximale d'un guide d'ondes secondaire du deuxième jeu de guides d'ondes secondaires lorsque la deuxième aiguille mobile passe dans un deuxième secteur prédéterminé du cadran, et l'extrémité distale du guide d'ondes secondaire du deuxième jeu de guides d'ondes secondaires étant couplée à un élément d'affichage du cadran prévue dans la zone d'affichage.

18. Dispositif d'affichage selon la revendication 17 **caractérisé en ce que** l'extrémité distales de chacun des guides d'ondes secondaires du deuxième jeu de guides d'ondes secondaires est associé à un index d'heures d'un tour d'heures.

19. Dispositif d'affichage selon la revendication 17 ou 18 , **caractérisé en ce que** la deuxième aiguille comprend un guide d'ondes lumineuses primaire, une extrémité proximale du guide d'ondes lumineuses primaire étant couplée à la deuxième source lumineuse, une extrémité distale du guide d'ondes primaire et une extrémité proximale du guide d'ondes secondaire étant agencées de façon à ce que le guide d'ondes primaire soit couplé à l'extrémité proximale d'un guide d'ondes secondaire du deuxième jeu de guides d'ondes secondaires lorsque la deuxième aiguille mobile passe dans le deuxième secteur prédéterminé du cadran.

20. Dispositif d'affichage selon l'une des revendications 17 à 19 **caractérisé en ce que** les première et deuxième sources lumineuses sont confondues.

21. Dispositif d'affichage selon les revendications 18 ou 19 **caractérisé en ce que** les extrémités distales des guides d'ondes secondaires du premier jeu de guides d'ondes secondaires et les extrémités distales des guides d'ondes secondaires du deuxième jeu de guides d'ondes secondaires sont disposées chacune long d'un cercle de diamètre différent.

22. Dispositif d'affichage selon l'une quelconque des revendications précédentes **caractérisé en ce que** ladite au moins une aiguille mobile est remplacée par un disque mobile comprenant ledit guide d'ondes lumineuses primaire.

23. Montre comprenant un dispositif d'affichage selon l'une quelconque des revendications précédentes.

24. Montre selon la revendication 23, comprenant deux aiguilles mobiles (9) comprenant chacune un guide d'ondes primaire (2), le guide d'ondes primaire de l'une des deux aiguilles étant disposé de façon à être couplé successivement à des éléments d'affichage (7) désignant les index des minutes, et l'autre aiguille étant disposée de façon à être couplée successivement à des éléments d'affichage (7) désignant les index des heures.

## Patentansprüche

1. Anzeigevorrichtung für einen tragbaren Gegenstand (14), wobei der tragbare Gegenstand (14) ein Zifferblatt (8) und wenigstens einen drehbeweglichen Zeiger (9, 17, 18) über dem Zifferblatt umfasst, wobei der wenigstens eine bewegliche Zeiger (9, 17, 18) eine Leuchtquelle (12, 13) umfasst oder an eine Leuchtquelle (1, 12, 13, 23, 24) gekoppelt ist, wobei die Anzeigevorrichtung **dadurch gekennzeichnet ist, dass** das Zifferblatt wenigstens einen ersten, so genannten "sekundären" Lichtwellenleiter (4, 21, 22) umfasst, der eine proximale Extremität, die in einem vorbestimmten Sektor des Zifferblatts eingerichtet ist, und eine distale Extremität umfasst, die eine Anzeigezone definiert, wobei die Leuchtquelle (1, 12, 13) und der sekundäre Wellenleiter (4, 21, 22) so angeordnet sind, dass die Leuchtquelle (1, 12, 13, 23, 24) an die proximale Extremität des sekundären Wellenleiters (4, 21, 22) gekoppelt ist, wenn der bewegliche Zeiger (9) in den vorbestimmten Sektor des Zifferblatts (8) übergeht, wobei die distale Extremität des sekundären Wellenleiters (4, 21, 22) an ein Anzeigeelement (7) des Zifferblatts (8) gekoppelt ist, das in der Anzeigezone vorgesehen ist.

2. Anzeigevorrichtung nach Anspruch 1, **dadurch gekennzeichnet, dass** der wenigstens eine bewegliche Zeiger (9, 17, 18) einen zweiten, so genannten "primären" Lichtwellenleiter (2) umfasst, wobei eine proximale Extremität des primären Lichtwellenleiters (2) an die Leuchtquelle (1, 12) gekoppelt ist, wobei eine distale Extremität des primären Wellenleiters (2) und eine proximale Extremität des sekundären Wellenleiters (4, 21, 22) so angeordnet sind, dass der primäre Wellenleiter (2) an die proximale Extremität des sekundären Wellenleiters (4) gekoppelt ist, wenn der bewegliche Zeiger (9, 17, 18) in den vorbestimmten Sektor des Zifferblatts (8) übergeht.

3. Anzeigevorrichtung nach Anspruch 2, **dadurch gekennzeichnet, dass** die Leuchtquelle (1) eine ringförmige Zone ist, die am Zifferblatt (8) befestigt ist und an die proximale Extremität des primären Wellenleiters gekoppelt ist.

4. Anzeigevorrichtung nach Anspruch 2, **dadurch gekennzeichnet, dass** die Leuchtquelle (12) in den beweglichen Zeiger (9, 17, 18) integriert ist.

5. Anzeigevorrichtung nach einem der Ansprüche 2 bis 4, **dadurch gekennzeichnet, dass** der bewegliche Zeiger (9, 17, 18) einen transparenten Werkstoff umfasst, in den der primäre Wellenleiter (2) eingelassen ist, wobei der primäre Wellenleiter (2) gekrümmt ist, sodass die Extraktion des Lichts und die Kopplung mit dem sekundären Wellenleiter (4, 21, 22) erleichtert werden.

6. Anzeigevorrichtung nach Anspruch 5, **dadurch gekennzeichnet, dass** der primäre Wellenleiter (2) einen geradlinigen Abschnitt umfasst, der an seinen zwei Extremitäten mit zwei gekrümmten Abschnitten verbunden ist, die jeweils gegenüber der Leuchtquelle (12) und der proximalen Extremität des sekundären Wellenleiters (4, 21, 22) münden.

7. Anzeigevorrichtung nach Anspruch 5 oder 6, **dadurch gekennzeichnet, dass** der primäre Wellenleiter (2) in der Dicke des Zeigers (9, 17, 18) ausgeführt ist.

8. Anzeigevorrichtung nach einem der vorstehenden Ansprüche, **dadurch gekennzeichnet, dass** das Zifferblatt (8) wenigstens eine transparente Schicht umfasst, in welcher der sekundäre Wellenleiter (4, 21, 22) eingelassen ist, wobei der sekundäre Wellenleiter (4, 21, 22) gekrümmt ist, sodass die Kopplung mit der Leuchtquelle (1, 12, 13, 23, 24) und dem Anzeigeelement erleichtert wird.

9. Anzeigevorrichtung nach Anspruch 8, **dadurch gekennzeichnet, dass** der sekundäre Wellenleiter (4, 21, 22) einen geradlinigen Abschnitt umfasst, der an seinen zwei Extremitäten mit zwei gekrümmten Abschnitten verbunden ist, die jeweils gegenüber der distalen Extremität des primären Wellenleiters und dem Anzeigeelement münden.

10. Anzeigevorrichtung nach Anspruch 8 oder 9, **dadurch gekennzeichnet, dass** der sekundäre Wellenleiter (4, 21, 22) in der Dicke der transparenten Schicht des Zifferblatts ausgeführt ist.

11. Anzeigevorrichtung nach einem der vorstehenden Ansprüche, **dadurch gekennzeichnet, dass** die Leuchtquelle (1, 12, 13, 23, 24) ein Licht mit einer Wellenlänge von weniger als 450 nm aussendet, wobei das Anzeigeelement (7) fluoreszierende Pigmente umfasst, die sichtbares Licht aussenden, wenn sie von der Leuchtquelle (1, 12, 13) erhellt werden.

12. Anzeigevorrichtung nach einem der vorstehenden Ansprüche, **dadurch gekennzeichnet, dass** sie Mikrolinsen (5, 6, 11) umfasst, um die Leuchtquelle (1, 12, 13) an den sekundären Wellenleiter (4) zu koppeln.

13. Vorrichtung nach Anspruch 12, **dadurch gekennzeichnet, dass** die Mikrolinsen (5, 6, 11) gegenüber der distalen Extremität des primären Wellenleiters und der proximalen Extremität des sekundären Wellenleiters angeordnet sind.

14. Anzeigevorrichtung nach einem der Ansprüche 2 bis 13, **dadurch gekennzeichnet, dass** der Zeiger (9) eine undurchsichtige dekorative Schicht (10) umfasst, die den primären Wellenleiter (2) oder die Leuchtquelle (12, 13) überdeckt.

15. Anzeigevorrichtung nach irgendeinem der vorstehenden Ansprüche, **dadurch gekennzeichnet, dass** das Zifferblatt (8) eine Vielzahl von sekundären Wellenleitern (21, 22) umfasst, die sich gemäß Radien erstrecken, die winkelig regelmäßig über 360° verteilt sind.

16. Anzeigevorrichtung nach irgendeinem der vorstehenden Ansprüche, **dadurch gekennzeichnet, dass** das Zifferblatt einen ersten Satz von sekundären Wellenleitern (21) umfasst, wovon die distale Extremität jedes Einzelnen einem Minutenindex (19) eines Stundenkreises zugeordnet ist.

17. Anzeigevorrichtung nach Anspruch 16, **dadurch gekennzeichnet, dass** sie einen zweiten drehbeweglichen Zeiger über dem Zifferblatt umfasst und dadurch, dass das Zifferblatt einen zweiten Satz von sekundären Wellenleitern umfasst, wobei der zweite Zeiger eine zweite Leuchtquelle umfasst oder an eine zweite Leuchtquelle gekoppelt ist, wobei die zweite Leuchtquelle und der zweite Satz von sekundären Wellenleitern so angeordnet sind, dass die zweite Leuchtquelle an die proximale Extremität eines sekundären Wellenleiters des zweiten Satzes von sekundären Wellenleitern gekoppelt ist, wenn der zweite bewegliche Zeiger in einen zweiten vorbestimmten Sektor des Zifferblatts übergeht, und wobei die distale Extremität des sekundären Wellenleiters des zweiten Satzes von sekundären Wellenleitern an ein Anzeigeelement des Zifferblatts gekoppelt ist, das in der Anzeigezone vorgesehen ist.

18. Anzeigevorrichtung nach Anspruch 17, **dadurch gekennzeichnet, dass** die distale Extremität jedes Einzelnen der sekundären Wellenleiter des zweiten Satzes von sekundären Wellenleitern einem Stundenindex eines Stundenkreises zugeordnet ist.

19. Anzeigevorrichtung nach Anspruch 17 oder 18, **dadurch gekennzeichnet, dass** der zweite Zeiger einen primären Lichtwellenleiter umfasst, wobei eine proximale Extremität des primären Lichtwellenleiters an die zweite Leuchtquelle gekoppelt ist, wobei eine distale Extremität des primären Wellenleiters und eine proximale Extremität des sekundären Wellenleiters so angeordnet sind, dass der primäre Wellenleiter an die proximale Extremität eines sekundären Wellenleiters des zweiten Satzes von sekundären Wellenleitern gekoppelt ist, wenn der zweite bewegliche Zeiger in den zweiten vorbestimmten Sektor des Zifferblatts übergeht.

20. Anzeigevorrichtung nach einem der Ansprüche 17 bis 19, **dadurch gekennzeichnet, dass** die ersten und zweiten Leuchtquellen zusammenfallen.

21. Anzeigevorrichtung nach den Ansprüchen 18 oder 19, **dadurch gekennzeichnet, dass** die distalen Extremitäten der sekundären Wellenleiter des ersten Satzes von sekundären Wellenleitern und die distalen Extremitäten der sekundären Wellenleiter des zweiten Satzes von sekundären Wellenleitern jeweils entlang eines Kreises mit unterschiedlichem Durchmesser angeordnet sind.

22. Anzeigevorrichtung nach irgendeinem der vorstehenden Ansprüche, **dadurch gekennzeichnet, dass** der wenigstens eine bewegliche Zeiger durch eine bewegliche Scheibe ersetzt wird, die den primären Lichtwellenleiter umfasst.

23. Uhr, umfassend eine Anzeigevorrichtung nach irgendeinem der vorstehenden Ansprüche.

24. Uhr nach Anspruch 23, umfassend zwei bewegliche Zeiger (9), die jeweils einen primären Wellenleiter (2) umfassen, wobei der primäre Wellenleiter eines der zwei Zeiger angeordnet ist, sodass er nacheinander an Anzeigeelemente (7) gekoppelt wird, welche die Minutenindizes bezeichnen, und der andere Zeiger angeordnet ist, sodass er nacheinander an Anzeigeelemente (7) gekoppelt wird, welche die Stundenindizes bezeichnen.

## Claims

1. Display device for a portable object (14), wherein the portable object (14) includes a dial (8) and at least one hand (9, 17, 18) movable in rotation over the dial, said at least one movable hand (9, 17, 18) including a light source (12, 13) or being coupled to a light source (1, 12, 13, 23, 24), the display device being **characterized in that** the dial includes at least one, light first waveguide (4, 21, 22), called «secondary waveguide», having a proximal end arranged in a predetermined sector of the dial and a distal end defining a display area, the light source (1, 12, 13) and the secondary waveguide (4, 21, 22) being arranged such that the light source (1, 12, 13, 23, 24) is coupled to the proximal end of the secondary waveguide (4, 21, 22) when the movable hand (9) moves into the predetermined sector of the dial (8), the distal end of the secondary waveguide (4, 21, 22) being coupled to a display element (7) of the dial (8) arranged in the display area.

2. Display device according to claim 1, **characterized in that** said at least one movable hand (9, 17, 18) includes a second light waveguide (2) called «primary waveguide», a proximal end of the primary light waveguide (2) being coupled to the light source (1, 12), a distal end of the primary waveguide (2) and a proximal end of the secondary waveguide (4, 21, 22) being arranged such that the primary waveguide (2) is coupled to the proximal end of the secondary waveguide (4) when the movable hand (9, 17, 18) moves into the predetermined sector of the dial (8).

3. Display device according to claim 2, **characterized in that** the light source (1) is an annular area secured to the dial (8) and coupled to the proximal end of the primary waveguide.

4. Display device according to claim 2, **characterized in that** the light source (12) is integrated in the movable hand (9, 17, 18).

5. Display device according to any of claims 2 to 4, **characterized in that** the movable hand (9, 17, 18) includes a transparent material in which said primary waveguide (2) is written, said primary waveguide (2) being curved to facilitate light extraction and coupling to said secondary waveguide (4, 21, 22).

6. Display device according to claim 5, **characterized in that** the primary waveguide (2) includes a rectilinear portion connected at both ends thereof by two curved portions respectively opening opposite the light source (12) and the proximal end of the secondary waveguide (4, 21, 22).

7. Display device according to claim 5 or 6, **characterized in that** the primary waveguide (2) is made in the thickness of the hand (9, 17, 18).

8. Display device according to any of the preceding claims, **characterized in that** the dial (8) includes at least one transparent layer in which said secondary waveguide (4, 21, 22) is written, said secondary waveguide (4, 21, 22) being curved to facilitate coupling to the light source (1, 12, 13, 23, 24) and the display element.

9. Display device according to claim 8, **characterized in that** the secondary waveguide (4, 21, 22) includes a rectilinear portion connected at both ends thereof by two curved portions respectively opening opposite the distal end of the primary waveguide and the display element.

10. Display device according to claim 8 or 9, **characterized in that** the secondary waveguide (4, 21, 22) is made in the thickness of the transparent layer of the dial.

11. Display device according to any of the preceding claims, **characterized in that** said light source (1, 12, 13, 23, 24) emits light at a wavelength less than 450 nm, the display element (7) including fluorescent pigments emitting visible light when they are illuminated by said light source (1, 12, 13).

12. Display device according to any of the preceding claims, **characterized in that** the device includes microlenses (5, 6, 11) for coupling the light source (1, 12, 13) to the secondary waveguide (4).

13. Device according to claim 12, **characterized in that** the microlenses (5, 6, 11) are arranged opposite the distal end of the primary waveguide and the proximal end of the secondary waveguide.

14. Display device according to any of claims 2 to 13, **characterized in that** the hand (9) includes an opaque decorative layer (10) concealing the primary waveguide (2) or the light source (12, 13).

15. Display device according to any of the preceding claims, **characterized in that** the dial (8) includes a plurality of secondary waveguides (21, 22) extending in radii regularly angularly arranged over 360°.

16. Display device according to any of the preceding claims, **characterized in that** the dial includes a first set of secondary waveguides (21) each having a distal end associated with a minute index (19) of an hour circle.

17. Display device according to claim 16, **characterized in that** the display device includes a second hand movable in rotation over the dial, **in that** the dial includes a second set of secondary waveguides, the second hand including a second light source or being coupled to a second light source, the second light source and the second set of secondary waveguides being arranged such that the second light source is coupled to the proximal end of a secondary waveguide of the second set of secondary waveguides when the movable second hand moves into a second predetermined sector of the dial, and the distal end of the secondary waveguide of the second set of secondary waveguides is coupled to a display element of the dial arranged in the display area.

18. Display device according to claim 17, **characterized in that** the distal ends of each of the secondary waveguides of the second set of secondary waveguides is associated with an hour index of an hour circle.

19. Display device according to claim 17 or 18, **characterized in that** the second hand includes a primary light waveguide, a proximal end of the primary light waveguide being coupled to the second light source, a distal end of the primary waveguide and a proximal end of the secondary waveguide being arranged such that the primary waveguide is coupled to the proximal end of a secondary waveguide of the second set of secondary waveguides when the second movable hand moves into the second predetermined sector of the dial.

20. Display device according to any of claims 17 to 19 **characterized in that** the first and second light sources are coincident.

21. Display device according to claims 18 or 19, **characterized in that** the distal ends of the secondary waveguides of the first set of secondary waveguides and the distal ends of the secondary waveguides of the second set of secondary waveguides are each arranged along a circle of different diameter.

22. Display device according to any of the preceding claims, **characterized in that** said at least one movable hand is replaced by a movable disc including said primary light waveguide.

23. Watch including a display device according to any of the preceding claims.

24. Watch according to claim 23, comprising two movable hands (9) each including a primary waveguide (2), the primary waveguide of one of the two hands being arranged to be coupled in succession to display elements (7) designating the minute indices and the other hand being arranged to be coupled in succession to display elements (7) designating the hour indices.
